# EUROPEAN PATENT APPLICATION

(11) **EP 4 019 201 A1**
(43) Date of publication of application: **29.06.2022**
(21) Application number: 19946342.3
(22) Date of filing: 27.09.2019
(51) Int. Cl.: B25J 9/16

(54) **ENCODING DRIVING DEVICE AND METHOD, AND ROBOT JOINT**

(71) Applicant: Siemens Ltd., China, Chaoyang District Beijing 100102 (CN)
(72) Inventor: PANG, Jianguo, Shanghai 200129 (CN); LI, Hao, Shanghai 201201 (CN); MIN, Lingbao, Shanghai 201601 (CN); HUA, Tao, Shanghai 200444 (CN)
(74) Representative: Isarpatent
(86) International application number: PCT/CN2019/108652
(87) International publication number: WO 2021/056447

(57) **Abstract**

Disclosed are an encoding driving device and method, and a robot joint. The encoding driving device comprises: a sensing module for detecting a physical signal sent by an encoder motion component and outputting a detection result; a central processing module for obtaining, by means of calculation, corresponding position information according to the detection result, and for generating, according to the position information, and current information used by an electric motor, a control signal for controlling the electric motor; a power module for providing, according to the control signal output by the central processing module, a drive signal for the electric motor, and for providing a set power protection; a power management module for accessing an alternating current or a direct current, and converting same into a power input that satisfies power supply requirements of the central processing module and the power module; and a current detection module for extracting, from the power module, the current information used by the electric motor, and for providing the current information to the central processing module. By means of the technical solution in the embodiments, a robot joint can be more compact.

## Description

### Technical Field

The present invention relates to the industrial field, and in particular, to an encoding driving device and a robot joint.

### Background Art

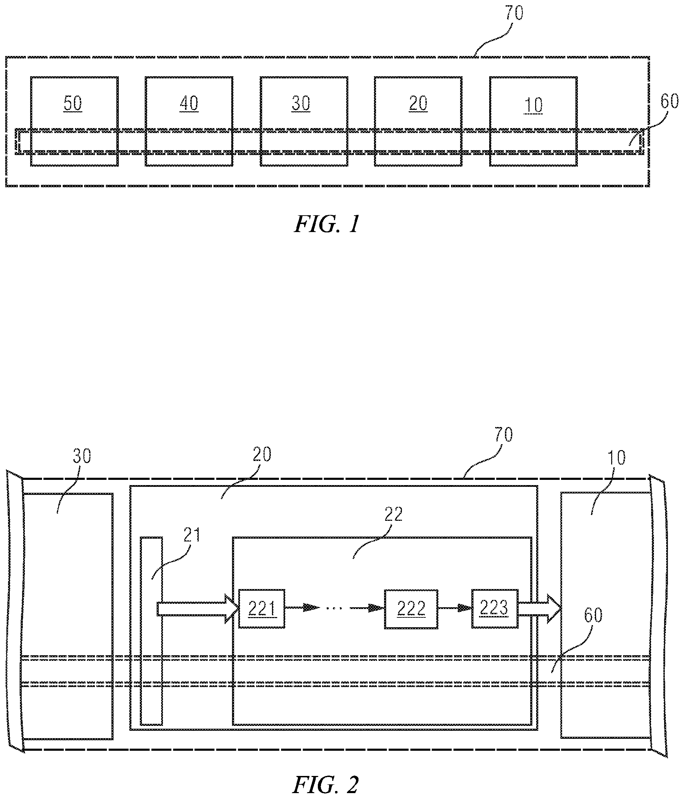

With the vigorous development of robots and robot-assisted products in the fields of industry, commerce, and health care, a new design trend that uses smaller and more compact components with high precision and reliability has come into existence. To achieve this, a solution is to design an integrated robot joint. For example, FIG. 1 is an exemplary structural block diagram of a typical integrated robot joint. As shown in FIG. 1, the robot joint includes a driver 10, a motor-side encoder 20, an electric motor 30, a speed reducer 40, an output-side encoder 50, a motor shaft 60, and all housing components 70. In practical applications, there are some minor differences for different specific applications.

Currently, those of ordinary skill in the art are still working on providing a robot joint with a more compact structure.

### Summary of the Invention

In view of this, one aspect of embodiments of the present invention proposes an encoding driving device and method, and another aspect thereof proposes a robot joint, so that the robot joint is more compact and has higher reliability.

The encoding driving device proposed in the embodiments of the present invention includes: a sensing module configured to detect a physical signal sent by a moving component of an encoder, and output a corresponding detection result; a central processing module configured to calculate corresponding position information based on the detection result, and generate, based on the position information and current information measured by a current detection module, a control signal for controlling an electric motor; a power module, which is electrically connected to the central processing module, and configured to provide a driving signal for the electric motor based on the control signal output by the central processing module, and provide set power protection; a power management module, which is electrically connected to each of the central processing module and the power module, and configured to access an alternating current or a direct current, and convert the alternating current or the direct current into a power input that meets a power supply requirement of the central processing module and the power module; and the current detection module, which is electrically connected to each of the central processing module and the power module, and configured to extract information about a current used by the electric motor from the power module, and provide the information about the current to the central processing module.

In an implementation, the central processing module is electrically connected to the sensing module.

In an implementation, the method further includes: an analog conditioning module, which is electrically connected to the sensing module, and configured to convert a detection result of an analog signal output by the sensing module into a signal meeting a subsequent processing requirement; and an analog-to-digital conversion module, which is electrically connected to each of the analog conditioning module and the central processing module, and configured to convert a signal output by the analog conditioning module from an analog signal into a digital signal, and then output the digital signal to the central processing module.

The encoding driving method proposed in the embodiments of the present invention includes: detecting, by a sensing module, a physical signal sent by a moving component of an encoder, to obtain a corresponding detection result; calculating corresponding position information based on the detection result, and generating, based on the position information and current information extracted by a current detection module from a power module, a control signal for controlling an electric motor; and providing the control information to the power module, so that the power module provides a driving signal to the electric motor and provides set power protection.

In an implementation, a detection result output by the sensing module is analog information; and before calculating corresponding position information based on the detection result, the method further includes: converting a detection result of an analog signal output by the sensing module into a digital signal.

In an implementation, the converting of a detection result of an analog signal output by the sensing module into a digital signal includes: converting, by an analog conditioning module, the detection result of the analog signal output by the sensing module into a signal meeting a subsequent processing requirement; and converting, by an analog-to-digital conversion module, the signal output by the analog conditioning module from an analog signal into a digital signal.

The robot joint proposed in the embodiments of the present invention includes: a moving component of an encoder, which is configured to send position information of a motor shaft through a specific physical signal; and an encoding driving device configured to detect the physical signal sent by the moving component of the encoder, calculate corresponding position information based on a detection result, and output, based on the position information and information about a current used by an electric motor currently, a driving signal for driving the electric motor.

In an implementation, the encoding driving device includes: a sensing module configured to detect a physical signal sent by the moving component of the encoder, and output a corresponding detection result; a central processing module configured to calculate corresponding position information based on the detection result, and generate, based on the position information and current information measured by a current detection module, a control signal for controlling the electric motor; a power module, which is electrically connected to the central processing module, and configured to provide a driving signal for the electric motor based on the control signal output by the central processing module, and provide set power protection; a power management module, which is electrically connected to each of the central processing module and the power module, and configured to access an alternating current or a direct current, and convert the alternating current or the direct current into a power input that meets a power supply requirement of the central processing module and the power module; and the current detection module, which is electrically connected to each of the central processing module and the power module, and configured to extract information about a current used by the electric motor from the power module, and provide the information about the current to the central processing module.

In an implementation, the central processing module is electrically connected to the sensing module.

In an implementation, the encoding driving device further includes: an analog conditioning module, which is electrically connected to the sensing module, and configured to convert a detection result of an analog signal output by the sensing module into a signal meeting a subsequent processing requirement; and an analog-to-digital conversion module, which is electrically connected to each of the analog conditioning module and the central processing module, and configured to convert a signal output by the analog conditioning module from an analog signal into a digital signal, and then output the digital signal to the central processing module.

It can be seen from the foregoing solution that, in the embodiments of the present invention, functions of a static component of the original motor-side encoder are integrated into an original driver side to form a new encoding driving device, and therefore, the original static component and a circuit board (PCB board) where the original static component is located are omitted. Therefore, an axial mounting distance between the circuit board and other components in the robot joint, especially the driver, can be omitted, thereby reducing an axial height of the entire robot joint and making the robot joint more compact. In addition, an encoder parameter configuration process and a connection establishment process on the driver side are also omitted, thereby simplifying an operation process.

### Brief Description of the Drawings

The preferred embodiments of the present invention will be described in detail hereinafter with reference to the accompanying drawings, to make the above mentioned and other features and advantages of the present invention more apparent to those of ordinary skill in the art, in which:
FIG. 1 is an exemplary structural block diagram of a typical integrated robot joint in an example;
FIG. 2 is a schematic structural diagram of a motor-side encoder in an example;
FIG. 3 is a schematic diagram of an internal structure of a static component of an encoder in an example;
FIG. 4 is a schematic diagram of an internal structure of a driver in an example;
FIG. 5 is an exemplary structural diagram of an encoding driving device according to an embodiment of the present invention;
FIG. 6 is an exemplary flowchart of an encoding driving method according to an embodiment of the present invention; and
FIG. 7 is an exemplary structural block diagram of a robot joint according to an embodiment of the present invention.

Reference signs in the accompanying drawings are as follows:

| Reference signs | Meaning |
|---|---|
| 10 | Driver |
| 11 | Second communications module |
| 12 | Control module |
| 13 and 83 | Power modules |
| 14 and 84 | Power management modules |
| 15 and 85 | Current detection modules |
| 20 | Motor-side encoder |
| 21 | Moving component |
| 22 | Static component |
| 221 and 81 | Sensing modules |
| 222 | Signal processing module |
| 223 | First communications module |
| 224 and 86 | Analog conditioning modules |
| 225 and 87 | Analog-to-digital conversion modules |
| 30 | Electric motor |
| 40 | Speed reducer |
| 50 | Output-side encoder |
| 60 and 90 | Motor shafts |
| 70 and 100 | Housings |
| 80 | Encoding driving device |
| 82 | Central processing module |
| S601, S602, and S603 | Steps |

### Detailed Description of Embodiments

In order to be concise and intuitive in description, the solution of the present invention is explained by describing several exemplary embodiments below. A large number of details in the embodiments are merely used to help understand the solution of the present invention. However, it is obvious that the implementation of the technical solution of the present invention may not be limited to these details. In order to prevent the solution of the present invention from being unnecessarily obscured, some embodiments are not described in detail, but only the framework thereof is given. Hereinafter, "including" means "including but not limited to", "according to" means "at least according to..., but not limited to only according to...". Due to the language habits of Chinese, when the number of a component is not specified in the following, it means that the number of the component may be one or more, or may be understood as at least one.

In the embodiments of the present invention, in order to obtain a more compact robot joint, an axial height of the robot joint is planned to be reduced. In view of this, a structure of a current robot joint needs to be analyzed and studied.

In order to meet the requirement of compactness, current encoders are all small-sized encoders, and may be optical, magnetic, and capacitive encoders. Regardless of the type of encoder, the encoder can usually be divided into two parts . Taking the motor-side encoder 20 as an example, FIG. 2 is a schematic structural diagram of a motor-side encoder 20. As shown in FIG. 2, the motor-side encoder includes a moving component 21 and a static component 22. Herein, the moving component 21 is usually a plane or a ring fixed on a motor shaft 60, rotates with the motor shaft, and transmits position information of the motor shaft by using a specific physical signal. The static component 22 is not fixed on the motor shaft 60, and has a sensing module 221 configured to detect a physical signal sent by the moving component 21 and output a detection result to another module on the static component 22. For example, if a signal output by the sensing module 221 is a digital signal, the digital signal may be directly output to a signal processing module 222. The signal processing module 222 calculates the corresponding position information, and transmits the position information to a driver 10 through a first communications module 223 according to some communications protocols, and the driver 10 controls the electric motor.

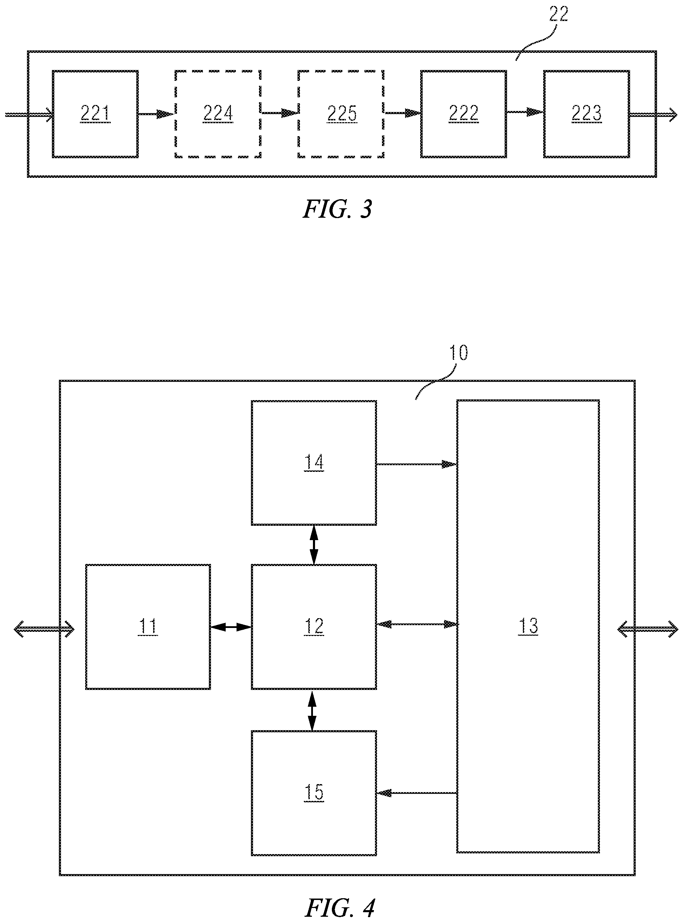

Certainly, if the signal output by the sensing module 221 is an analog signal, the static component 22 may be further a dashed-line part shown in FIG. 3. FIG. 3 is a schematic structural diagram of the static component 22 in an example. An analog conditioning module 224 and an analog-to-digital conversion (ADC) module 225 are further disposed between the sensing module 221 and the signal processing module 222, and are used for adjusting the analog signal detected by the sensing module 221 and converting the analog signal into a range and format required by the signal processing module 222.

In addition, an internal structure of the driver 10 in an application may be shown in FIG. 4, including: a second communications module 11, a control module 12, a power module 13, a power management module 14, and a current detection module 15. Herein, the second communications module 11 is configured to receive the position information sent by the motor-side encoder through the first communications module 223, and provide the received position information to the control module 12. The control module 12 is configured to coordinately control the power module 13, the power management module 14, and the current detection module 15 based on the position information, and output, through the power module 14, a driving signal for controlling the electric motor 30.

Herein, in order to implement signal transmission between the encoder 20 and the driver 10, the control module 12 of the driver 10 further needs to be configured. For example, a parameter of the encoder and a protocol and parameter for communicating with the encoder are configured. Then, it is further required to perform interconnect matching (for example, bandwidth matching) with the encoder 20, and a communication connection is established between the encoder and the driver. Then, the driver 10 can receive, through the second communications module 11, the position information of the motor shaft sent by the encoder 20.

In this embodiment of the present invention, structures of the static component 22 of the encoder 20 and the driver 10 are analyzed, and it is considered that both the signal processing module 222 in the static component 22 of the encoder 20 and the control module 12 in the driver 10 can be implemented as a field programmable gate array (FPGA), a digital signal processor (DSP), or an electronic chip for a dedicated scenario, such as an application-specific integrated circuit (ASIC) . Therefore, the static component and the driver can be combined into one device for implementation, and correspondingly, the first communications module 223 and the second communications module 11 and a physical gap between the two can be omitted, so that an axial distance of the robot joint can be reduced and the robot joint becomes more compact. Correspondingly, the foregoing parameter configuration process and connection establishment process may also be omitted, thereby directly receiving the position information of the motor shaft that is sent by the encoder.

In order to make the technical solution and advantages of the present invention clearer, the present invention is further illustrated in detail below in conjunction with the accompanying drawings and embodiments . It should be understood that the specific embodiments described herein are merely used for illustratively describing the present invention, but not limiting the scope of protection of the present invention.

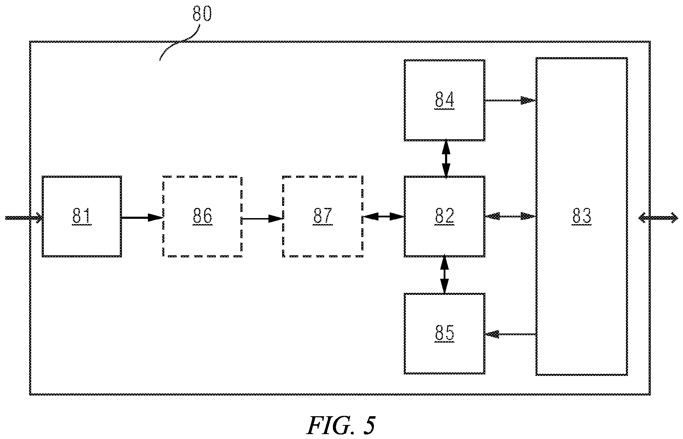

FIG. 5 is an exemplary structural diagram of an encoding driving device 80 according to an embodiment of the present invention. As shown in FIG. 5, in the solid-line parts, the encoding driving device may include: a sensing module 81, a central processing module 82, a power module 83, a power management module 84, and a current detection module 85. In another implementation, as shown in the dashed-line parts, the encoding driving device may further include an analog conditioning module 86 and an analog-to-digital conversion module 87.

Herein, the sensing module 81 is configured to detect a physical signal sent by a moving component 21 of an encoder, and output a corresponding detection result. When the detection result is a digital signal, the sensing module 81 is electrically connected to the central processing module 82, and is configured to directly provide the detection result to the central processing module 82. When the detection result is an analog signal, the sensing module 81 is electrically connected to the analog conditioning module 86, and is configured to provide the detection result to the analog conditioning module 86.

The central processing module 82 is configured to calculate corresponding position information based on the detection result, and generate, based on the position information and current information measured by the current detection module 85, a control signal for controlling the electric motor 30. In addition, the central processing module 82 may further coordinately control the power module 83, the power management module 84, and the current detection module 85.

The power module 83 is electrically connected to the central processing module 82, and is configured to provide a driving signal for the electric motor based on the control signal output by the central processing module 82, and provide set power protection.

The power management module 84 is electrically connected to each of the central processing module 82 and the power module 83, and is configured to access an alternating current or a direct current, and convert the alternating current or the direct current into a power input that meets a power supply requirement of the central processing module 82 and the power module 83.

The current detection module 85 is electrically connected to each of the central processing module 82 and the power module 83, and is configured to extract information about a current used by the electric motor from the power module 83, and provide the information about the current to the central processing module 82.

The analog conditioning module 86 is configured to convert the detection result of the analog signal output by the sensing module 81 into a signal meeting a subsequent processing requirement.

The analog-to-digital conversion module 87 is electrically connected to each of the analog conditioning module 86 and the central processing module 82, and is configured to convert a signal output by the analog conditioning module 86 from an analog signal into a digital signal, and then output the digital signal to the central processing module 82.

The encoding driving device in the embodiments of the present invention is described in detail above, and the encoding driving method in the embodiments of the present invention is described in detail below. The encoding driving device in the embodiments of the present invention may be used for implementing the encoding driving method in the embodiments of the present invention. For details undisclosed in the method embodiment of the present invention, reference may be made to the corresponding descriptions in the device embodiment of the present invention. Details are not described herein again.

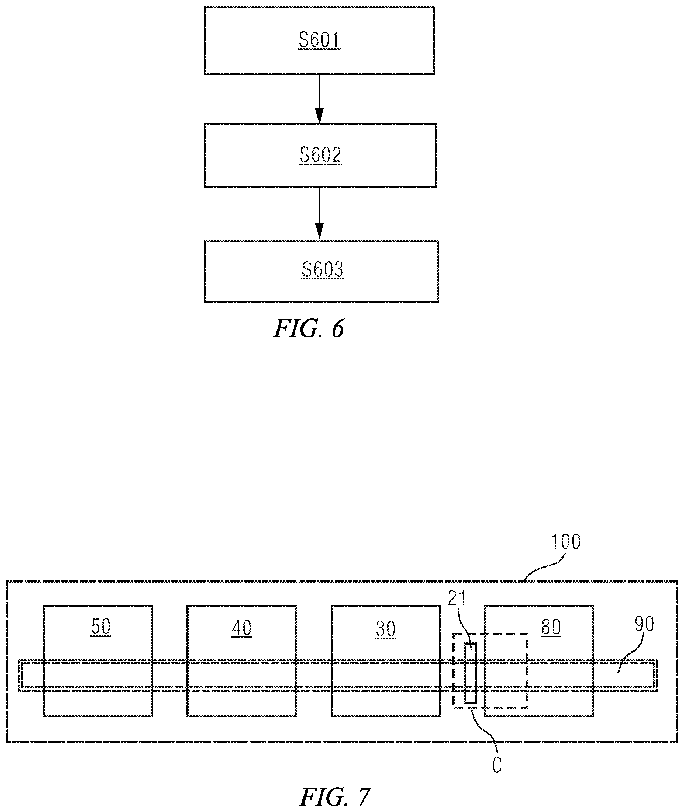

FIG. 6 shows an exemplary flow of an encoding driving method according to an embodiment of the present invention. As shown in FIG. 6, the method may include the following steps:
Step S601: a sensing module 81 detects a physical signal sent by a moving component 21 of an encoder, to obtain a corresponding detection result.
Step S602: corresponding position information is calculated based on the detection result, and a control signal for controlling an electric motor 30 is generated based on the position information and current information extracted by a current detection module 85 from a power module 83.
Step S603: the control information is provided to the power module 83, so that the power module 83 provides a driving signal to the electric motor and provides set power protection.

In an implementation, if a detection result output by the sensing module 81 is analog information, before step 602, the method may further include: converting a detection result of an analog signal output by the sensing module 81 into a digital signal.

For example, first, the analog conditioning module 86 may convert the detection result of the analog signal output by the sensing module 81 into a signal meeting a subsequent processing requirement, and the analog-to-digital conversion module 87 converts the signal output by the analog conditioning module 86 from an analog signal into a digital signal.

FIG. 7 is a schematic structural diagram of a robot joint according to an embodiment of the present invention. As shown in FIG. 7, the robot joint includes: an encoding driving device 80, a moving component 21 of an encoder, a frameless torque electric motor 30, a precision speed reducer 40, an output-side encoder 50, a motor shaft 90, and all housing components 100. In FIG. 7, a part circled by a dashed box C represents a functional part corresponding to the original motor-side encoder.

Herein, the moving component 21 of the encoder is configured to send position information of a motor shaft through a specific physical signal.

The encoding driving device 80 is configured to detect the physical signal sent by the moving component 21 of the encoder, calculate corresponding position information based on a detection result, and output, based on the position information and information about a current used by an electric motor currently, a driving signal for driving the electric motor 30.

During specific implementation, an internal structure of the encoding driving device 80 may be shown in FIG. 5, including: a sensing module 81, a central processing module 82, a power management module 84, a power module 83, and a current detection module 85. In another implementation, as shown in the dashed-line parts, the encoding driving device may further include an analog conditioning module 86 and an analog-to-digital conversion module 87.

Driven by the driving signal, the electric motor 30 drives the motor shaft 90 to rotate.

The speed reducer 40 is configured to perform corresponding engaging motion driven by the motor shaft 90.

The output-side encoder 50 is configured to send position information on an output side.

In the embodiments of the present invention, the encoding driving device 80 integrates functions of the static component 22 of the original motor-side encoder 20, and therefore, the original static component 22 and a circuit board (PCB board) where the original static component is located are omitted. Therefore, an axial mounting distance between the circuit board and other components in the robot joint, especially the driver 10, can be omitted, thereby reducing an axial height of the entire robot joint and making the robot joint more compact.

It should be noted that not all the steps and modules in the flows and structural diagrams described above are necessary, and some steps or modules may be omitted according to practical requirements. The execution order of the steps is not fixed and may be adjusted according to requirements. The division of the modules is merely function division adopted for ease of description. In actual implementation, one module may be implemented by a plurality of modules, respectively, and functions of a plurality of modules may also be implemented by the same module. These modules may be located in the same device, or may be located in different devices.

It can be understood that hardware modules in various implementations described above may be implemented mechanically or electrically. For example, a hardware module may include a specially designed permanent circuit or logic device (for example, a dedicated processor, such as an ASIC) for completing a specific operation. The hardware module may also include a programmable logic device (for example, an FPGA) or a circuit (for example, including a general-purpose processor or other programmable processors) configured by software temporarily for carrying out a specific operation. Whether the hardware module is implemented in a mechanical manner, by using a dedicated permanent circuit, or by using a temporarily configured circuit (for example, configured by software) may be determined based on costs and time. In addition, an encoder parameter configuration process and a connection establishment process on the driver side are also omitted, thereby simplifying an operation process.

The foregoing descriptions are merely preferred embodiments of the present invention, and are not intended to limit the present invention. Any modifications, equivalent replacements, improvements, and the like made within the spirit and principle of the present invention shall fall within the scope of protection of the present invention.

## Claims

1. An encoding driving device, **characterized by** comprising:
a sensing module (81) configured to detect a physical signal sent by a moving component (21) of an encoder, and output a corresponding detection result;
a central processing module (82) configured to calculate corresponding position information based on the detection result, and generate, based on the position information and current information measured by a current detection module (85), a control signal for controlling an electric motor (30);
a power module (83), which is electrically connected to the central processing module (82), and configured to provide a driving signal for the electric motor based on the control signal output by the central processing module (82), and provide set power protection;
a power management module (84), which is electrically connected to each of the central processing module (82) and the power module (83), and configured to access an alternating current or a direct current, and convert the alternating current or the direct current into a power input that meets a power supply requirement of the central processing module (82) and the power module (83); and
the current detection module (85), which is electrically connected to each of the central processing module (82) and the power module (83), and configured to extract information about a current used by the electric motor from the power module (83), and provide the information about the current to the central processing module (82).

2. The encoding driving device as claimed in claim 1, **characterized in that** the central processing module (82) is electrically connected to the sensing module (81).

3. The encoding driving device as claimed in claim 1, **characterized by** further comprising:
an analog conditioning module (86), which is electrically connected to the sensing module (81), and configured to convert a detection result of an analog signal output by the sensing module (81) into a signal meeting a subsequent processing requirement; and
an analog-to-digital conversion module (87), which is electrically connected to each of the analog conditioning module (86) and the central processing module (82), and configured to convert a signal output by the analog conditioning module (86) from an analog signal into a digital signal, and then output the digital signal to the central processing module (82).

4. An encoding driving method, **characterized by** comprising:
detecting, by a sensing module (81), a physical signal sent by a moving component (21) of an encoder, to obtain a corresponding detection result;
calculating corresponding position information based on the detection result, and generating, based on the position information and current information extracted by a current detection module (85) from a power module (83), a control signal for controlling an electric motor (30); and
providing the control information to the power module (83), so that the power module (83) provides a driving signal to the electric motor and provides set power protection.

5. The encoding driving method as claimed in claim 4, **characterized in that** a detection result output by the sensing module (81) is analog information; and before calculating corresponding position information based on the detection result, the method further comprises:
converting a detection result of an analog signal output by the sensing module (81) into a digital signal.

6. The encoding driving method as claimed in claim 5, **characterized in that** the converting of a detection result of an analog signal output by the sensing module (81) into a digital signal comprises:
converting, by an analog conditioning module (86), the detection result of the analog signal output by the sensing module (81) into a signal meeting a subsequent processing requirement; and
converting, by an analog-to-digital conversion module (87), the signal output by the analog conditioning module (86) from an analog signal into a digital signal.

7. A robot joint, **characterized by** comprising:
a moving component (21) of an encoder, which is configured to send position information of a motor shaft through a specific physical signal; and
an encoding driving device (80) configured to detect the physical signal sent by the moving component (21) of the encoder, calculate corresponding position information based on a detection result, and output, based on the position information and information about a current used by an electric motor currently, a driving signal for driving the electric motor (30).

8. The robot joint as claimed in claim 7, **characterized in that** the encoding driving device (80) comprises:
a sensing module (81) configured to detect a physical signal sent by the moving component (21) of the encoder, and output a corresponding detection result;
a central processing module (82) configured to calculate corresponding position information based on the detection result, and generate, based on the position information and current information measured by a current detection module (85), a control signal for controlling the electric motor (30);
a power module (83), which is electrically connected to the central processing module (82), and configured to provide a driving signal for the electric motor based on the control signal output by the central processing module (82), and provide set power protection;
a power management module (84), which is electrically connected to each of the central processing module (82) and the power module (83), and configured to access an alternating current or a direct current, and convert the alternating current or the direct current into a power input that meets a power supply requirement of the central processing module (82) and the power module (83); and
the current detection module (85), which is electrically connected to each of the central processing module (82) and the power module (83), and configured to extract information about a current used by the electric motor from the power module (83), and provide the information about the current to the central processing module (82).

9. The robot joint as claimed in claim 8, **characterized in that** the central processing module (82) is electrically connected to the sensing module (81).

10. The robot joint as claimed in claim 8, **characterized by** further comprising:
an analog conditioning module (86), which is electrically connected to the sensing module (81), and configured to convert a detection result of an analog signal output by the sensing module (81) into a signal meeting a subsequent processing requirement; and
an analog-to-digital conversion module (87), which is electrically connected to each of the analog conditioning module (86) and the central processing module (82), and configured to convert a signal output by the analog conditioning module (86) from an analog signal into a digital signal, and then output the digital signal to the central processing module (82).
